# EUROPEAN PATENT SPECIFICATION

(11) **EP 3 716 787 B1**
(45) Date of publication and mention of the grant of the patent: **18.02.2026**
(21) Application number: 18839913.3
(22) Date of filing: 30.11.2018
(51) Int. Cl.: A21D 15/00

(54) **COMPOSITION FOR THE PRESERVATION OF BREAD**
ZUSAMMENSETZUNG ZUR KONSERVIERUNG VON BROT
COMPOSITION POUR LA CONSERVATION DU PAIN

(30) Priority: 30.11.2017 WO PCT/NL2017/050797
(43) Date of publication of application: 07.10.2020
(73) Proprietor: Purac Biochem B.V., 4206 AC Gorinchem (NL)
(72) Inventor: VERHEEZEN, Jacobus Johannes Adriana Maria, 4206 AC Gorinchem (NL); SLIEKERS, Arne Olav, 4826 GG Breda (NL); OLDS, Jabin Dean, Olathe Kansas 66061 (US)
(74) Representative: Nederlandsch Octrooibureau
(86) International application number: PCT/NL2018/050804
(87) International publication number: WO 2019/108064

(56) References cited:
- WO-A1-2015/147638
- US-A- 2 898 372
- AMIN MIRSHEKARI ET AL: "Suitability of combination of calcium propionate and chitosan for preserving minimally processed banana quality", JOURNAL OF THE SCIENCE OF FOOD AND AGRICULTURE, 30 August 2017 (2017-08-30), Chichester, UK, pages 3706 - 3711, XP055490475, Retrieved from the Internet <URL:www.sciencedirect.com> DOI: 10.1002/jsfa.8231
- NANCY J. MOON: "Inhibition of the growth of acid tolerant yeasts by acetate, lactate and propionate and their synergistic mixtures", JOURNAL OF APPLIED MICROBIOLOGY, vol. 55, no. 3, 1 December 1983 (1983-12-01), GB, pages 453 - 460, XP055490391, ISSN: 0021-8847, DOI: 10.1111/j.1365-2672.1983.tb01685.x
- MC NAUGHTON: "Antimicrobial efficacy of preservative combinations in South African brown bread.", MICROBIOS, vol. 93, no. 376, 1 January 1998 (1998-01-01), GB, pages 169 - 178, XP055490397, ISSN: 0026-2633, Retrieved from the Internet <URL:http://www.ncbi.nlm.nih.gov/pubmed/9721672>
- V. MELINI: "Strategies to Extend Bread and GF Bread Shelf-Life: From Sourdough to Antimicrobial Active Packaging and Nanotechnology", FERMENTATION, vol. 4, no. 1, 2 February 2018 (2018-02-02), pages 1 - 18, XP055490481, DOI: 10.3390/fermentation4010009
- J U AMAJOR ET AL: "A Study on Possible Use of Calcium Propionate and Ascorbic Acid in the Production of Cassava Bread", INTERNATIONAL JOURNAL OF LIFE SCIENCES RESEARCH ISSN, vol. 5, no. 2, 1 April 2017 (2017-04-01), pages 132 - 137, XP055490793
- SALIM UR REHMAN: "Studies on the shelf life of bread using acidulants and their salts", TURKISH JOURNAL OF BIOLOGY, 1 January 2010 (2010-01-01), pages 133 - 138, XP055490470, Retrieved from the Internet <URL:https://pdfs.semanticscholar.org/b9d2/cf610365107c7532a37d7dadbb4cdfaa9ff8.pdf> DOI: 10.3906/biy-0803-20
- A T-L D VON HOLY PATTISON LINDSAY ET AL: "Natural Antimicrobials as Potential REplacements for Calcium Propionate in Bread: Research Article", SOUTH AFRICAN JOURNAL OF SCIENCE, 1 July 2004 (2004-07-01), South Africa, pages 342 - 342, XP055490713, Retrieved from the Internet <URL:https://journals.co.za/deliver/fulltext/sajsci/100/7-8/sajsci_v100_n7_a11.pdf?itemId=/content/sajsci/100/7-8/EJC96278&mimeType=pdf&containerItemId=content/journal/sajsci>
- JAMES P. SMITH ET AL: "Shelf Life and Safety Concerns of Bakery Products-A Review", CRITICAL REVIEWS IN FOOD SCIENCE AND NUTRITION, vol. 44, no. 1, 1 January 2004 (2004-01-01), USA, pages 19 - 55, XP055490414, ISSN: 1040-8398, DOI: 10.1080/10408690490263774
- PEI WANG ET AL: "Comparative study of deterioration procedure in chemical-leavened steamed bread dough under frozen storage and freeze/thaw condition", FOOD CHEMISTRY, 15 August 2017 (2017-08-15), England, pages 464 - 471, XP055490413, Retrieved from the Internet <URL:http://pjbmb.org.pk/images/PJBMBArchive/2012/PJBMB_45_2_Jun_2012/06.pdf> DOI: 10.1016/j.foodchem.2017.02.122

## Description

### Field of the Invention

The present invention relates to compositions and processes for preparing microbially stable edible products from dough and to processes and compositions for preparing edible dough-based products having improved mold resistance, extended shelf-life and good organoleptic properties.

### Background of the Invention

The growth of mold, rope, spoilage yeasts and bacteria is a significant problem in edible dough-based products, such as, for example, bread and other baked goods. Such microbial growth significantly reduces the commercial shelf life of the product, increasing the sellers' direct costs due to moldy products that cannot be sold to the consumer and limiting the time available for storage, distribution, display, sale and consumption of the product.

Various preservatives are on the market and are used to inhibit microbial growth so as to extend the shelf-life of edible dough-based products. Examples of such preservatives are sodium benzoate, calcium benzoate, potassium benzoate, sodium diacetate, paraben, niacin, calcium acetate, calcium diacetate, sorbic acid, sodium sorbate, calcium sorbate, potassium sorbate, sodium propionate, calcium propionate and potassium propionate. To date calcium propionate is the most commonly used agent for inhibiting mold growth in bread and similar baked products.

When used at concentrations that effectively increase shelf life, these preservatives can impart an off-flavor, odor, color and/or texture (e.g., poor crumb structure) to the final product that is undesirable to the consumer. In addition, preservatives can also inhibit yeast cultures which are used to prepare the dough-based product, resulting in manufacturing problems, such as, proofing problems, and increasing costs due to the need to use greater amounts of yeast to offset the yeast inhibition. Because of the problems associated with the use of preservatives in dough-based products, as a compromise, it has been necessary in the art to employ relatively low concentrations of preservatives, that is, preservative concentrations which provide some anti-mold effect, but do not create unacceptable processing conditions due to yeast dosage requirements or unacceptable impairment to the flavor, odor, color and/or texture of the product. Accordingly, the prior art discloses the use of preservatives, such as, calcium propionate, sodium propionate, sorbic acid, potassium sorbate and sodium benzoate, in dough and baked products at very low concentrations. For example, US 3,900,570 discloses a maximum usage of calcium propionate of 0.25 parts by weight per 100 parts of flour in the finished dough, with the preferred range being about 0.06 to about 0.12 parts. US 4,416,904 discloses concentrations of 0.04% to 0.10% for sodium benzoate, 0.05% to 0.20% for sorbic acid, and 0.4% for calcium propionate. More recently, WO 99/08553 discloses that preservatives, such as, sodium and calcium propionate, are typically added to bakery products in small concentrations in the range of 0.1 to 0.625%, calculated on the weight of the flour. Tarar et al., (Turk J Biol, 34(2010) discloses a maximum usage of 0.4% lactic acid in combination with 0.2% calcium propionate, with a preferred amount of lactic acid being 0.2% or 0.3%, in combination with 0.2% calcium propionate.

US 6,132,786 proposes another solution for obtaining improved mold inhibition without impacting the organoleptic properties of the baked product by using food grade metabolites produced by Propionibacterium sp, instead of traditional preservatives, such as, propionic acid. The metabolites are reported to have a neutral taste, which does not change the flavor of the product, as compared to propionic acid, which is stated to have a distinct unpleasant taste. The metabolites are stated not to result in deleterious changes in the consistency or structural integrity of the finished or stored baked product. Nevertheless, it has been difficult to obtain effective and uniform mold inhibition using propionibacteria metabolites.

In the past two or three decades a trend has emerged, wherein consumers become increasingly adverse to artificial preservatives being listed among the ingredients in the foods consume. As a result of this development, fermentatively produced propionate products (such as the products offered under the tradenames J&K Breadmate, Kerry Upgrade WS, Corbion Verdad F95) have indeed found their way to the (bakery) market. In practice though it is still consistently found and reported that such ferments affect the taste and aroma of the baked products to a too large (negative) extent. A further disadvantage of these products is that they are relatively expensive.

It is an object of the present invention to provide further improvements in mold inhibition in bread and other (baked) dough products.

### Summary of the Invention

The present inventors found that this objective can be met by using a combination of an acetate component and a propionate component, in particular by combining a (buffered) vinegar and a propionate component prepared by fermentation. It was found that by using such combinations in appropriate ratio's, a product is obtained that can be applied in bread and other baked dough products to accomplish satisfactory mold inhibitory effects at dosages that do not (negatively) affect the organoleptic properties of the product, such as flavor, taste or aroma.

Hence, a preservative system is provided that can effectively replace calcium propionate, with the additional advantage that it does not (need to) contain any ingredients that are considered artificial/synthetic preservatives and the preservative system therefore suits the demand for 'all natural' food ingredients and can be used in 'clean label' products.

Hence, the present invention provides new preservative systems, the uses thereof for inhibiting mold in baked dough products, and the baked dough products, as defined in the appended claims.

These and other aspects of the invention will become apparent on the basis of the following detailed description and the appended examples

### Detailed description of the Invention

Hence, a first aspect of the invention concerns an Organic acid preservative system, particularly suitable for the preservation of bread and similar baked products, comprising an acetate component, said acetate component comprising acetic acid and/or one or more acetic acid salts, and a propionate component, said propionate component comprising propionic acid and/or one or more propionic acid salts, wherein the acetate component and the propionate component make up at least 85 wt.% of the total amount of carboxylic acids and carboxylic acid salts in the preservative system and wherein the propionate component makes up 12 to 50 wt.% of said total amount of carboxylic acids and carboxylic acid salts, wherein the preservative system upon dissolution in water at 10 % (w/v) produces a pH value of at least 4.3.

As used herein the term 'acetate component' is used to denote compounds or ingredients comprised in the composition comprising the acetate anion and thus includes acetic acid in free acid form as well as any salt thereof. Whenever in this document the 'acetate component' is described and/or quantified, this thus concerns the combined content of acetic acid and any salt thereof, unless indicated otherwise. In a preferred embodiment of the invention, an organic acid preservative system as defined herein is provided, wherein the acetate component comprises a combination of acetic acid and acetic acid salts, selected from the group consisting of sodium acetate, potassium acetate, calcium acetate and combinations thereof. In a particularly preferred embodiment of the invention, the acetate component comprises a combination of acetic acid and potassium acetate.

Similarly, the term 'propionate component' refers to all compounds or ingredients comprised in the composition comprising the propionate anion and thus includes propionic acid in free acid form as well as any salt thereof. Whenever in this document the 'propionate component' is described and/or quantified, this thus concerns the combined content propionic acid and any salt thereof, unless indicated otherwise. In a preferred embodiment of the invention, an organic acid preservative system as defined herein is provided, wherein the propionate component comprises a combination of propionic acid and propionic acid salts, selected from the group consisting of sodium propionate, potassium propionate, calcium propionate and combinations thereof. In a particularly preferred embodiment of the invention, the acetate component comprises a combination of propionic acid and calcium propionate.

In a preferred embodiment of the invention, an organic acid preservative system as defined herein is provided, wherein the acetate component and the propionate component together make up at least 85 wt.% of the total amount of carboxylic acids and carboxylic acid salts in the preservative system. More preferably, the acetate component and the propionate component together make up at least 85 wt.%, at least 86 wt.%, at least 87 wt.%, at least 88 wt.%, at least 89 wt.%, at least 90 wt.%, at least 91 wt.%, at least 92 wt.%, at least 93 wt.%, at least 94 wt.%, at least 95 wt.%, at least 96 wt.%, at least 97 wt.%, at least 98 wt.%, or at least 99 wt.% of the total amount of carboxylic acids and carboxylic acid salts in the preservative system.

In a preferred embodiment of the invention, an organic acid preservative system as defined herein is provided, wherein the propionate component makes up 12 to 50 wt.% of said total amount of carboxylic acids and carboxylic acid salts. More preferably the propionate component makes up at least 13 wt.%, at least 14 wt.%, at least 15 wt.%, at least 16 wt.%, at least 17 wt.%, at least 17 wt.%, at least 18 wt.%, at least 19 wt.%, at least 20 wt.%, at least 21 wt.%, at least 22 wt.%, at least 23 wt.%, at least 24 wt.%, or at least 25 wt.% of the total amount of carboxylic acids and carboxylic acid salts in the preservative system. Furthermore, it is preferred that the propionate component makes up less than 48 wt.%, less than 46 wt.%, less than 44 wt.%, less than 42 wt.%, less than 40 wt.%, less than 38 wt.%, less than 37 wt.%, less than 36 wt.%, or less than 35 wt.%, of the total amount of carboxylic acids and carboxylic acid salts in the preservative system

In a preferred embodiment of the invention, an organic acid preservative system as defined herein is provided, wherein the propionate component and the acetate component are present in ratio (w/w) within the range of 0.1/1 to 1/1. For instance, said ratio may be at least 0.11/1, at least 0.12/1, at least 0.13/1, at least 0.14/1 or at least 0.15/1 and/or said ratio may be less than 0.9/1, less than 0.8/1, less than 0.7/1, less than 0.6/1, less than 0.5/1, less than 0.4/1, less than 0.3/1, or less than 0.2/1. In particularly preferred embodiment of the invention, an organic acid preservative system as defined herein is provided, wherein the propionate component and the acetate component are present in ratio (w/w)within the range of 0.12/1 to 0.4/1, more preferably within the range of 0.14/1 to 0.3/1.

In a preferred embodiment of the invention, an organic acid preservative system as defined herein is provided, wherein the preservative system upon dissolution in water at 10 % (w/v) produces a pH value within the range of 4.3-7. For instance, said pH value may be at least 4.4 or at least 4.5 and/or it may be less than 6.9, less than 6.8, less than 6.7, less than 6.6, less than 6.5, less than 6.4, less than 6.3, less than 6.2, less than 6.1, or less than 6.0. In particularly preferred embodiments of the invention, the preservative system upon dissolution in water at 10 % (w/v) produces a pH value within the range of 4.5-6.7, more preferably within the range of 5-6.5.

In a preferred embodiment of the invention, an organic acid preservative system as defined herein is provided, wherein the preservative system has a total amount of acidity within the range of 300 to 1500 mmol/100 g. The term 'acidity' is often used to characterize the type of products of this invention. In this context, the term "total acidity" is used to denote the total amount of organic acids in salt form and in acid form per unit of volume or mass of the product. "Total acidity" can e.g. be expressed in mmol of acid per 100 g of the product. Total acidity can also be expressed as a weight percentage, on the basis of the acid (molar) weight(s). When different types of organic acids are present, total acidity is the sum of the total acidities per organic acid (for this the total acidities per single acid have to be known/determined). For instance, the total amount of acidity is at least 350 mmol/100g, at least 400 mmol/100g, at least 450 mmol/100g, or at least 500 mmol/100g and/or it is less than 1500 mmol/100g, less than 1400 mmol/100g, less than 1300 mmol/100g, less than 1200 mmol/100g or less than 1100 mmol/100g. In particularly preferred embodiments of the invention, the preservative system has a total amount of acidity within the range of 400-1300 mmol/100g, more preferably 450-1200 mmol/100g, most preferably 500-1100 mmol/100g.

In accordance with the embodiments of the invention, the total amount of acidity for the acetate component may be at least 350 mmol/100g, at least 400 mmol/100g, at least 450 mmol/100g, or at least 500 mmol/100g and/or it may be less than 1400 mmol/100g, less than 1300 mmol/100g, less than 1200 mmol/100g or less than 1100 mmol/100g. In accordance with the embodiments of the invention, the total amount of acidity for the propionate component may be at least 30 mmol/100g, at least 40 mmol/100g, at least 50 mmol/100g, at least 60 mmol/100g, or at least 70 mmol/100g and/or it may be less than 700 mmol/100g, less than 500 mmol/100g, less than 250 mmol/100g or less than 100 mmol/100g.

In preferred embodiments of the invention, the acetic acid component is incorporated in the preservative system in the form or a vinegar. Hence, in an embodiment of the invention, an organic acid preservative system as defined herein is provided, comprising a vinegar as the source of the acetate component, e.g. a non-neutralized, partly neutralized or completely neutralized vinegar. The term vinegar is used to denote the liquid obtained by the acetous fermentation of an alcoholic liquid, containing at least 4 grams of acetic acid per 100 ml, in particular a vinegar that can be declared 'natural', e.g. in terms of the FDA guidelines. According to said guidelines "natural" means minimally processed and containing no synthetic ingredients or processing aids (cf. Food Labeling: Nutrient Content Claims General Principles, Petitions, Definitions of Terms, 56 Fed. Reg. at 60,466). Additional components typically present in vinegars may have favorable organoleptic profiles, which contribute positively to the taste and flavor characteristics of food products to which they are added. Moreover, the use of vinegar as the source of the acetate component will provide additional benefits with regard to labeling and regulatory aspects.

In a preferred embodiment the preservative system comprises a non-neutralized, partly neutralized or completely neutralized vinegar selected from the group consisting of white vinegar, brandy vinegar, alcoholic vinegar, balsamic vinegar, wine vinegar, malt vinegar, beer vinegar, potato vinegar, rice vinegar, apple vinegar, cherry vinegar, and cane vinegar. In a particularly preferred embodiment of the invention, the vinegar is cane vinegar. In a preferred embodiment of the invention, the acetic acid content of the vinegar is at least 5 % (w/w), more preferably at least 7.5 % (w/w), even more preferably at least 10 % (w/w). It is also possible to make use of vinegar that has been pre-concentrated to a certain extent. Such products are commercially available and typically have an acetic acid content between 20 and 30 % (w/w). In a preferred embodiment of the invention, the acetic acid content of the vinegar is at least 20 % (w/w), more preferably at least 25 % (w/w), e.g. about 29 or 30 % (w/w). A common measure for indicating the acetic acid content of vinegar is the grain strength. The grain strength is the acetic acid content expressed in g/l, so 50 grain vinegar is about 5% (w/w) acetic acid. As will be appreciated by those skilled in the art, it is preferred that the vinegar is at least 200 grain, more preferably at least 250 grain. Often, commercial food-grade vinegars are offered at 200 grain, 300 grain or 400 grain. In one preferred embodiment of the invention, a 300 grain vinegar is used.

In a particularly preferred embodiment of the invention, a buffered vinegar is used, e.g. a buffered vinegar produced by neutralizing vinegar with a neutralizing agent such as sodium hydroxide, potassium hydroxide, calcium hydroxide, sodium carbonate, potassium carbonate, calcium carbonate, etc., to attain an appropriate acetate to acetic acid ratio (which can be determining using the Henderson-Hasselbalch equation).

In a particularly preferred embodiment of the invention, the acetate component is a concentrated buffered vinegar obtainable by a process, such as has been described in published PCT application no. WO 2015/147638, said process comprising the steps of a) providing a liquid vinegar as defined here above; b) adding an alkaline potassium compound to said liquid vinegar to produce a neutralized vinegar having a pH of at least 6; and c) concentrating said neutralized vinegar to a dry solids level of above 50 % (w/w) by evaporation. Optionally the concentrated neutralized vinegar obtained in step c) may be combined with a second liquid vinegar. Preferably said second liquid vinegar is a vinegar of 200-300 grain As will be understood by those skilled in the art, these processes yield a highly concentrated buffered vinegar. In a particularly preferred embodiment of the invention, the concentrated buffered vinegar has a free acidity of at least 3.5 g/100 ml, more preferably at least 4 g/100 ml, most preferably at least 4.2 g/100 ml. Products produced in accordance with this embodiment of the invention can be listed as "vinegar" and/or as "natural".

In a particularly preferred embodiment of the invention, the acetate component is a concentrated buffered vinegar obtainable by a process, such as has been described in published PCT application no. WO2014/021719, said process comprising the steps of: a) providing a first liquid vinegar; b) adjusting the pH of said first liquid vinegar to a value within the range of 6.0-10.0. to produce a neutralized vinegar; c) drying said neutralized vinegar to produce vinegar derived particles having a water content of less than 5 wt.%. Optionally a second liquid vinegar may be combined with the vinegar derived particles, e.g. in a weight ratio of 1 : 15 to 1 :5. In certain embodiments, the vinegar derived particles are agitated and the temperature of the vinegar derived particles and second liquid vinegar is controlled to stay below 54°C during this step.

Propionate can suitably be produced by fermentation. In the context of this invention, it is preferred to employ propionate obtained by fermenting glucose, lactose or lactate, particularly lactate, using an appropriate micro-organism, such as propionic acid bacteria. Hence, in a particularly preferred embodiment of the invention an organic acid preservative system as defined herein is provided, comprising a propionic acid or propionate ferment as the source of the propionate component. In accordance with this embodiment such propionic acid ferment or propionate ferment may be non-neutralized, partly neutralized or completely neutralized and/or it may be a crude ferment or a partially purified/clarified ferment. Such a ferment is typically characterized by the presence of other fermentation products such as acetate, lactate and/or succinate and typically has very favorable organoleptic profiles, which contribute positively to the taste and flavor characteristics of food products to which they are added. Moreover, such fermentation products will provide additional benefits with regard to labeling and regulatory aspects.

As used herein the term 'fermentation product' refers to a composition that is obtainable by fermentation of a fermentable substrate with a suitable microorganism, in this case a propionic acid producing microorganism, resulting in a composition typically comprising, besides the propionic acid component, traces of the fermentable substrate, other substances produced by the microorganism, and traces of the microorganism itself, e.g. cellular debris and/or cellular components. The propionic acid producing micro-organisms may also produce other preservative compounds such as acetic acid, lactic acid, succinic acid, bacteriocins, etc. As such, a liquid fermentation product is distinguishable from e.g. highly purified products or chemically produced products. The term however does not exclude products which have been subjected to some form of purification/clarification and/or concentration.

In one embodiment, the fermentation product is the supernatant obtainable by fermentation of a fermentable substrate with a propionic acid producing microorganism followed by separating supernatant from (wet) biomass and other solid particles.

In one embodiment of the invention, the fermentation product is a concentrated supernatant obtainable by fermentation of a fermentable substrate with a propionic acid producing microorganism followed by separating supernatant from (wet) biomass and other solid particles and concentrating the supernatant.

In one embodiment of the invention the fermentation product is a partially purified and optionally concentrated supernatant obtainable by fermentation of a fermentable substrate with a propionic acid producing microorganism followed by separation of supernatant from (wet) biomass and other solid particles, purification of the supernatant and, optionally, concentration of the supernatant, with the proviso that the purification does not result in a level of the propionate component of more than 97 wt.% on a dry solids weight basis, preferably it does not result in a level of the propionate component of more than 96 wt% on a dry solids weight basis, most preferably it does not result in a level of the propionate component of more than 95 wt.% on a dry solids weight basis.

As will be clear to those skilled in the art, the fermentation product comprises other dispersed or dissolved solids besides the propionate component. Typical examples of such other dispersed or dissolved solids include sugars, such as lactose, glucose and sucrose; other organic acids and/or salts thereof, such as lactic acid, citric acid, pyruvic acid, malic acid, succinic acid, formic acid and acetic acid; nitrogen containing substances, such as amino acids, peptides and proteins; nucleic acid components such as DNA and RNA fragments, nucleotides and nucleosides; cell membrane phospholipids; vitamins; trace elements; and pigments. In a preferred embodiment of the invention the propionic acid ferment comprises at least one, at least two, at least three, at least four or at least five components selected from the group consisting of lactose, glucose, sucrose, lactic acid and salts thereof, citric acid and salts thereof, pyruvic acid and salts thereof, malic acid and salts thereof, succinic acid and salts thereof, formic acid and salts thereof, acetic acid and salts thereof, amino acids, peptides and proteins.

In a particularly preferred embodiment of the invention, the propionate component is a composition obtainable by a process comprising the steps of:
a) providing a nutrient medium comprising a solution of a fermentable substrate and a nitrogen source in an aqueous medium;
b) inoculating said nutrient medium with a propionic acid producing microorganism;
c) incubating the inoculated nutrient medium under conditions favorable to the growth and/or metabolic activity of said propionic acid producing microorganism, for a period sufficient to produce a first fermentation broth containing a propionate component;
d) removing wet biomass from said first fermentation broth to obtain a supernatant; and, optionally,
e) subjecting said supernatant to further purification, with the proviso that the purification does not result in a level of the propionate component of more than 95 wt%, on a dry solids basis.

In a particularly preferred embodiment of the invention, step a) comprises providing a nutrient medium comprising a carbon source selected from glucose, lactose or lactate and step b) comprises inoculating said nutrient medium with propionic acid producing bacteria, in particular bacteria from the genus propionibacterium, such as *Propionibacterium freudenreichii, Propionibacterium shermanii, Propionibacterium acidi-propionici, Propionibacterium thoenii* and/or *Propionibacterium jensenii.* As stated above, in a preferred process a step d) is performed comprising removing wet biomass and other solid particles from the fermentation broth to obtain a supernatant, which can be used as the liquid fermentation product according to the invention. The process may optionally comprise a step e) comprising subjecting the supernatant to further purification, with the proviso that the purification does not result in a level of the propionate component of more than 97 wt.% on a dry solids basis, preferably it does not result in a level of the propionate component of more than 96 wt.% on a dry solids weight basis, most preferably it does not result in a level of the propionate component of more than 96 wt.% on a dry solids weight basis. In a preferred embodiment of the present invention, a process as defined herein before is provided, wherein the supernatant as separated from the wet biomass in step d) is not subjected to a processing step wherein dissolved or non-dissolved solid matter is removed.

As will be understood on the basis of the foregoing, particularly preferred embodiments of the invention, provide organic acid preservative systems as defined herein, comprising a vinegar, a buffered vinegar, a concentrated vinegar or a buffered concentrated vinegar as the source of the acetate component and/or a propionic acid ferment, a neutralized propionate ferment or a partially neutralized propionate ferment as the source of the propionate component.

In a preferred embodiment of the invention, organic acid preservative systems as defined herein are provided, comprising a first ingredient selected from the group of vinegars, buffered vinegars, concentrated vinegars and buffered concentrated vinegars, and a second ingredient selected from propionate ferments, neutralized propionate ferments and partially neutralized propionate ferments.

In a further preferred embodiment of the invention, organic acid preservative systems as defined herein are provided, obtainable by combining a first ingredient selected from the group of vinegars, buffered vinegars, concentrated vinegars and buffered concentrated vinegars, and a second ingredient selected from propionate ferments, neutralized propionate ferments and partially neutralized propionate ferments.

The organic acid preservative systems of the present invention can suitably be formulated as a liquid or solid product, e.g. in the form of a free-flowing powder. Typically the organic acid preservative system is provided in a form that facilitates transportation, storage and handling (e.g.) a bakery in the best possible way. It will especially be considered convenient, in many cases, to provide the preservative system in a highly concentrated form that can either be used directly or that can easily be diluted or dissolved with a predetermined quantity of plain (tap) water in order to provide it in ready-to-use form. Hence, in embodiments of the invention, organic acid preservative systems as defined herein are provided, wherein the preservative system has the form of a free-flowing powder or a liquid concentrate. In certain embodiments of the invention the preservative system further comprises a carrier system, comprising one or more solid or liquid carrier materials and optionally one or more additives.

In a particularly preferred embodiment of the invention, a liquid preservative system is provided comprising a solution or dispersion of the above defined components in a liquid carrier, preferably water. In a particularly preferred embodiment of the invention a liquid preservative system is produced by combining the above defined components with water or an aqueous solvent and optional further additives. Such liquid preservative system are suitable for direct application, although embodiments are envisaged wherein such compositions are further diluted before applying them.

In other embodiments of the invention, the preservative system is in the form of a free flowing powder or granulate, which may comprise one or more other excipients and/or a carrier material. A suitable, non-limiting, example of an excipient/carrier that is particularly suitable for use in the accordance with this embodiment is maltodextrin. In another preferred embodiment a free flowing powder is provided consisting essentially of the combination of a propionate component and an acetate component. Such a free flowing powder may be obtained by combining the various components in an aqueous dispersion or solution followed by drying, e.g. spray-drying and/or by dry-blending individually produced dry formulations of the propionate component and acetate component.

As will be understood, on the basis of the foregoing, the preservative systems of the present invention can have widely varying amounts of dry solids. More in particular, compositions are envisaged substantially consisting of the combination of an acetate component and a propionate component, which compositions are typically intended for use after dispersing in water, as well as ready-to-use compositions comprising the acetate component and propionate component at concentrations suitable for treatment of dough products in accordance with the invention.

Hence, in an embodiment of the invention, a preservative system as defined herein is provided, which is formulated as a dry powder comprising the acetate component and the propionate component in a combined amount of at least 75 wt.%, based on the total weight of the dry powder, more preferably in a combined amount of at least 80 wt.%, most preferably in a combined amount of at least 85 wt.%. In an embodiment of the invention, the dry powder consists substantially or entirely of the combination of an acetate component and propionate component. In an embodiment of the invention, the dry powder consists substantially or entirely of the combination of an acetate component and propionate component.

In an embodiment of the invention, a preservative system as defined herein is provided, which is formulated as a concentrated slurry. The concentrated slurry typically comprises the combination of an acetate component and propionate component dispersed or dissolved in water. Such concentrated slurries are typically intended for dilution with water before use. Such concentrated slurries will typically comprise the combination of an acetate component and propionate component in a combined amount of at least 20 wt.%, based on the total weight of the concentrated slurry, more preferably in a combined amount of at least 40 wt.%, most preferably in a combined amount of at least 50 wt.%.

In an embodiment of the invention, a preservative system as defined herein is provided, wherein the composition is formulated as a ready-to-use liquid slurry. This liquid slurry typically comprises the combination of an acetate component and propionate component dispersed or dissolved in water. Such liquid slurries will typically comprise the combination of an acetate component and propionate component in a combined amount of 1-20 wt.%, based on the total weight of the liquid slurry, more preferably in a combined amount of 2.5-15 wt.%, most preferably in a combined amount of 5-12.5 wt.%.

In an embodiment of the invention, the ready-to-use liquid slurry has a pH within the range of 4.3-6.7, most preferably within the range of 4,5-6.5.

Another aspect, which is not claimed, concerns a method of producing a preservative system as defined herein, said method comprising mixing or blending an acetate component and a propionate component, typically in accordance with what is described here above.

The preservative system of the present invention is particularly suited for the preservation of baked dough products, such as bread and similar products produced by heating/baking a farinaceous dough. Generally stated, the products wherein the preservative systems of the present invention can advantageously be applied include those products produced from a dough that minimally includes flour, a liquid component and a leavening agent. Other ingredients can suitably be included in a dough include fat components, salt, sweeteners, dairy products, egg products, emulsifiers, flavorings and the like. To produce the desired dough products, a raw dough composition is first produced. After a raw dough composition has been assembled, it will often be proofed before baking. The proofed composition can then be baked in a baking chamber, such as in a conventional oven, convection oven, impingement oven or the like. Examples of products produced in this manner include bread, French bread, rye bread, sticky buns, pizza, cake, doughnuts, Berliner, muffins, pastry, croissants, brioches, pannetones, pies, tarts, quiches, cookies, scones, crackers, pretzels, bagels rusk and tortillas. More preferably, the present method is employed to prepare bread, cake or pastry. Most preferably the method is used in the preparation of bread. In the preparation of such products, the organic acid preservative system of the invention can advantageously be incorporated in the raw dough composition, typically prior to the proofing step, although embodiments are envisaged according to which the organic acid preservative composition may be applied to the surface of a dough product at any stage after proofing or baking.

A further aspect of the invention concerns a method of producing microbiologically stable edible farinaceous product, especially a baked bread product or baked pastry product, the method comprising the steps of:
a) providing a mixture including at least flour, water, yeast and salt in amounts for forming a dough;
b) blending with the dough a quantity of an organic acid preservative system as defined in the appended claims;
c) shaping or molding the dough; and
d) baking the shaped or molded dough to produce an edible product,
wherein the preservative system as defined in any one of claims 1-10 is applied in a quantity providing a dosage of the acetate component within the range of 500 40,000 ppm, based on the weight of the dough, and in a quantity providing a dosage of the propionate component within the range of 25-20,000 ppm, based on the weight of the dough..

As will be understood by those skilled in the art, the method as described above, will also typically comprise a step of leavening of the dough, which may take place after step a) and/or step b).

The preservative may be applied in an amount effective to inhibit mold, rope, spoilage yeast, and/or bacteria growth during storage of the dough-based product. Microbial inhibition (during storage) is usually determined by visual inspection for microbial growth, such as, when the first mold growth.

The amount of preservative added will vary depending on the shelf-life desired and/or on the what is acceptable from the organoleptic and/or sensory perspective. As will be understood by those skilled in the art on the basis of the present teachings, a larger amount of the preservative system should be added if a longer shelf life is desired. Optimization of the amount can be performed using dosage optimization experiments. In preferred embodiments, the preservative system is applied in an amount such that the first spoilage microbial growth (e.g., mold) does not appear on the product until at least 5 days from cooking (e.g., baking), more preferably, at least 6 days, at least 7 days, at least 8 days, at least 9 days, at least 10 days, at least 11 days, at least 12 days, at least 13 days, at least 14 days, at least 15 days, at least 16 days, at least 17 days, at least 18 days, at least 19 days, or at least 20 days from preparation (e.g., baking), as can determined by visual inspection after the product is stored at ambient temperatures and humidity in closed polyethylene bags after the bread has cooled down after baking unwrapped for about 10 minutes to about 3 hours.

Typically, satisfactory results can be attained by applying the preservative system in a quantity providing a dosage of the acetate component (in ppm, based on the baker's weight, i.e. as a proportion relative to the amount of flour used) of 500-40000 ppm. For instance said dosage may be at least 1000 ppm, at least 1500 ppm, at least 2000 ppm, at least 2500 ppm or at least 3000 ppm and/or less than 30000 ppm, less than 25000 ppm, less than 20000 ppm, less than 15000 ppm or less than 10000 ppm. Satisfactory results can be attained by applying the preservative system in a quantity providing a dosage of the propionate component (in ppm, based on the baker's weight) of 25-20000 ppm. For instance said dosage may be at least 50 ppm, at least 75 ppm, at least 100 ppm, at least 150 ppm or at least 200 ppm and/or less than 15000 ppm, less than 10000 ppm, less than 8000 ppm, less than 6000 ppm or less than 4000 ppm.

A further aspect of the invention concerns an edible farinaceous product obtainable by the process as defined here above.

Yet a further aspect of the invention, concerns the use of an organic acid preservative system as defined herein as a mold inhibitor in edible farinaceous products, especially in baked dough products, preferably in bread. Other exemplary embodiments include the use of the organic acid preservative system in a product selected from the group consisting of bread, French bread, rye bread, sticky buns, pizza, cake, doughnuts, Berliner, muffins, pastry, croissants, brioches, pannetones, pies, tarts, quiches, cookies, scones, crackers, pretzels, bagels rusk and tortillas.

In a preferred embodiment of the invention said mold is selected from the group of *Penicillium roqueforti, Penicillium commune, Penicillium crustosum, Penicillium chrysogenum, Aspergillus flavus, Cladosporium sp., Aspergillus niger, Aspergillus fumigatus, Neurospora sitophila,* and *Rhizopus nigricans,* preferably from the group of *Penicillium roqueforti, Penicillium commune, Penicillium crustosum, Penicillium chrysogenum, Aspergillus flavus and Cladosporium sp.*

In preferred embodiments of the invention, the uses as defined herein comprise the addition of the organic acid preservative system as defined herein to the un-baked dough. In preferred embodiments the use is for extending the shelf-life of the baked dough product until at least 5 days from baking, more preferably, at least 6 days, at least 7 days, at least 8 days, at least 9 days, at least 10 days, at least 11 days, at least 12 days, at least 13 days, at least 14 days, at least 15 days, at least 16 days, at least 17 days, at least 18 days, at least 19 days, or at least 20 days from preparation (e.g., baking).

It will be understood on the basis of the present teachings, that the invention additionally pertains to the use of an acetate component as defined herein as a mold inhibitor in edible farinaceous products, especially in baked dough products, in combination with a propionate component. Similarly, the invention additionally pertains to the use of a propionate component as defined herein as a mold inhibitor in edible farinaceous products, especially in baked dough products, in combination with an acetate component. Hence, the present invention embraces an acetate component, such as a vinegar, a buffered vinegar or a concentrated buffered vinegar, contained in a package or container and provided with printed instructions, e.g. on a leaflet or label, for using said acetate component for mold inhibition in such products in conjunction with a propionate component in accordance with the present teachings. Similarly, the present invention embraces a propionate component, such as a propionate ferment, contained in a package or container and provided with printed instructions, e.g. on a leaflet or label, for use of said propionate component for mold inhibition in such products, in conjunction with a propionate component in accordance with the present teachings. The present invention also embraces a kit of parts comprising such an acetate component as well as such a propionate component, individually packaged and provided with such printed instructions.

Thus, the invention has been described by reference to certain embodiments discussed above. It will be recognized that these embodiments are susceptible to various modifications and alternative forms well known to those of skill in the art. Many modifications in addition to those described above may be made to the structures and techniques described herein without departing from the spirit and scope of the invention. Furthermore, for a proper understanding of this document and in its claims, it is to be understood that the verb "to comprise" and its conjugations is used in its non-limiting sense to mean that items following the word are included, but items not specifically mentioned are not excluded. The indefinite article "a" or "an" thus usually means "at least one". The term "consisting" wherever used herein also embraces "consisting substantially", but may optionally be limited to its strict meaning of "consisting entirely". Where upper and lower limits are quoted for a property, then a range of values defined by a combination of any of the upper limits with any of the lower limits may also be implied. It should be appreciated that the various aspects and embodiments of the detailed description as disclosed herein are illustrative of the specific ways to make and use the invention and do not limit the scope of invention when taken into consideration with the claims and the detailed description. It will also be appreciated that features from different aspects and embodiments of the invention may be combined with features from any other aspects and embodiments of the invention.

The following examples are offered for illustrative purposes only, and are not intended to limit the scope of the present invention in any way.

### Examples

### Example 1: White bread comprising test formulations according to the invention and inoculation testing

This experiment was set up to validate the invention in a laboratory setting. Various formulations according to the present invention ('test formulations') in either liquid form (Test formulations 1, 2 and 3) or powder form (Test formulation 4) were tested and compared to control (no additive), and some reference products, including Calcium Propionate, which is the current benchmark product, and 'Kerry Upgrade' (a commercially available mold inhibitor comprising an organic acid blend). The test formulations were prepared from propionate ferment, concentrated neutralized vinegar and standard 300 grain vinegar in appropriate amounts. Details of the experimental formulations tested are shown in the following Table 1.

**Table 1: test formulation specifications**

| | | Prototype name | | | |
|---|---|---|---|---|---|
| | | Test formulation 1 | Test formulation 2 | Test formulation 3 | Test formulation 4 |
| Acetate | (%) | 29,59 | 29,10 | 27,53 | 26,90 |
| Propionate | (%) | 5,54 | 5,89 | 7,00 | 29,60 |
| Lactate | (%) | 1,21 | 1,29 | 1,53 | 6,70 |
| Na | (%) | 2,90 | 3,08 | 3,67 | 19,50 |
| K | (%) | 18,32 | 17,93 | 16,67 | 4,90 |
| Dry matter | (%) | 59,5 | | 59,0 | 100,0 |
| Use level | (%) | 1,63 | 2,14 | 2,31 | |
| pH direct | (-) | 8,39 | 8,35 | 8,15 | |
| pH 10% | (-) | 6,47 | 6,45 | 6,27 | 7,2 |
| Aw | (-) | 0,449 | 0,461 | 0,641 | |
| Acetate | (mol/100 g) | 0,501 | 0,493 | 0,466 | 0,456 |
| Propionate | (mol/100 g) | 0,076 | 0,081 | 0,096 | 0,405 |
| Lactate | (mol/100 g) | 0,014 | 0,014 | 0,017 | 0,075 |
| Na | (mol/100 g) | 0,126 | 0,134 | 0,159 | 0,848 |
| K | (mol/100 g) | 0,469 | 0,458 | 0,426 | 0,125 |
| Total anion | (mol/100 g) | 0,591 | 0,588 | 0,579 | 0,936 |
| Total cation | (mol/100 g) | 0,595 | 0,593 | 0,586 | 0,974 |
| Total acidity | (mol/100 g) | 0,591 | 0,588 | 0,579 | 0,936 |

The formulations were tested in (white) bread loafs. White bread loafs were prepared by forming a dough containing a test formulation and baking the dough in an (otherwise) conventional manner. In this process, the dough was also evaluated for rheological properties and baking performance to determine if the test formulations had a (negative) effect on the finished product using the standard processing conditions. If so, minor process adjustments were implemented to compensate any such effect.

The resulting specifications of the doughs and the baking process are summarized in table 2.

Additional parameters of the dough processing, proofing and baking are summarized in Table 3 below. These parameters were similar for all experiments.

**Table 2: Processing Parameters**

| | |
|---|---|
| Bowl Chiller | 18°C |
| Water Temp | 45°F |
| Room Temp | 78°F |
| Scaling Wt. | 525g |
| Floor Time | 10min |
| Rest | 5min |
| 2^{nd} Roller | 2.6 |
| Pressure Board | 2.8 |
| Baking Temp | 420°F |
| Baking Time | 20min |
| Proof | Template |
| Bag at | 60min |

**Table 3: Dough recipes and process specifications**

| | 1 (no add) | | 2 (Cal Pro) | | 3 (Kerry Upgrade) | | 4 (Test Formulation 1) | | 5 (Test Formulation 2) | | 6 (Test Formulation 3) | | 7 (Test Formulation 4) | |
|---|---|---|---|---|---|---|---|---|---|---|---|---|---|---|
| | amount | Baker's % | amount | Baker's % | amount | Baker's % | amount | Baker's % | amount | Baker's % | amount | Baker's % | amount | Baker's % |
| **No time dough** | | | | | | | | | | | | | | |
| Polar white | 400.00 | 100.00 | 400.00 | 100.00 | 400.00 | 100.00 | 400.00 | 100.00 | 400.00 | 100.00 | 400.00 | 100.00 | 400.00 | 100.00 |
| Salt | 80.00 | 2.00 | 80.00 | 2.00 | 80.00 | 2.00 | 80.00 | 2.00 | 80.00 | 2.00 | 80.00 | 2.00 | 72.00 | 1.80 |
| Calcium propionate | | | 20.00 | 0.50 | | | | | | | | | | |
| Test formulation 1 | | | | | | | 65.20 | 1.63 | | | | | | |
| Test formulation 2 | | | | | | | | | 85.60 | 2.14 | | | | |
| Test formulation 3 | | | | | | | | | | | 92.40 | 2.31 | | |
| Purac Powder 60 ^{®} | | | | | | | 14.00 | 0.35 | 14.00 | 0.35 | 14.00 | 0.35 | 14.00 | 0.35 |
| Kerry Upgrade | | | | | 40.00 | 1.00 | | | | | | | | |
| 200 gr vinegar | | | 20.00 | 0.50 | 20.00 | 0.50 | | | | | | | | |
| Test formulation 4 | | | | | | | | | | | | | 40.00 | 1.00 |
| Granulated Sugar | 320.00 | 8.00 | 320.00 | 8.00 | 320.00 | 8.00 | 320.00 | 8.00 | 320.00 | 8.00 | 320.00 | 8.00 | 320.00 | 8.00 |
| Pristine Concentrate | 4.00 | 0.10 | 4.00 | 0.10 | 4.00 | 0.10 | 4.00 | 0.10 | 4.00 | 0.10 | 4.00 | 0.10 | 4.00 | 0.10 |
| Ultra Fresh 250 | 10.00 | 0.25 | 10.00 | 0.25 | 10.00 | 0.25 | 10.00 | 0.25 | 10.00 | 0.25 | 10.00 | 0.25 | 10.00 | 0.25 |
| Ascorbic acid (10%) | 1.56 | 0.04 | 1.56 | 0.04 | 1.56 | 0.04 | 1.56 | 0.04 | 1.56 | 0.04 | 1.56 | 0.04 | 1.56 | 0.04 |
| GMS 520 | 40.00 | 1.00 | 40.00 | 1.00 | 40.00 | 1.00 | 40.00 | 1.00 | 40.00 | 1.00 | 40.00 | 1.00 | 40.00 | 1.00 |
| Compressed Yeast | 260.00 | 6.50 | 340.00 | 8.50 | 340.00 | 8.50 | 340.00 | 8.50 | 340.00 | 8.50 | 340.00 | 8.50 | 340.00 | 8.50 |
| Soybean Oil | 80.00 | 2.00 | 80.00 | 2.00 | 80.00 | 2.00 | 80.00 | 2.00 | 80.00 | 2.00 | 80.00 | 2.00 | 80.00 | 2.00 |
| Water | 2536.00 | 63.40 | 2480.00 | 62.00 | 2480.00 | 62.00 | 2444.80 | 61.12 | 2433.60 | 60.84 | 2430.00 | 60.75 | 2480.00 | 62.00 |
| Total | 7331.56 | | 7395.56 | | 7395.56 | | 7399.56 | | 7408.76 | | 7411.96 | | 7401.60 | |
| Baking Parameters | | | | | | | | | | | | | | |
| Mix time (1L/12H) | 1L/11H | | 1L/12H | | 1L/13H | | 1L/11.5H | | 1L/18H | | 1L/20H | | 1L/18H | |
| Dough Temperature | 76 °F | | 76 °F | | 76 °F | | 76 °F | | 76 °F | | 76 °F | | 76 °F | |
| Dough rest time | 10 min. | | 10 min. | | 10 min. | | 10 min. | | 10 min. | | 10 min. | | 10 min. | |
| Scaling Weight | 525g (4 loaves) | | 525g (4 loaves) | | 525g (4 loaves) | | 525g (4 loaves) | | 525g (4 loaves) | | 525g (4 loaves) | | 525g (4 loaves) | |
| Pans | 1lb loaves | | 1lb loaves | | 1lb loaves | | 1lb loaves | | 1lb loaves | | 1lb loaves | | 1lb loaves | |
| Bake temperature | 420 °F | | 420 °F | | 420 °F | | 420 °F | | 420 °F | | 420 °F | | 420 °F | |
| Bake Time | 20 min. | | 20 min. | | 20 min. | | 20 min. | | 20 min. | | 20 min. | | 21 min. | |
| Proof time | 45 min. | | 64 min. | | 57 min. | | 57 min. | | 57 min. | | 61 min. | | 59 min. | |
| | | | | | | | | | | | | | | |

### Inoculation Testing

To validate the mold inhibition properties of the invention, an inoculation study was conducted. The cocktail of mold spore species utilized are in Table 4.

**Table 4: Mold spore species used**

| **Strain** |
|---|
| *Penicillium roqueforti* |
| *Penicillium commune* |
| *Penicillium crustosum* |
| *Penicillium chrysogenum* |
| *Aspergillus flavous* |
| *Cladosporium* sp. |

The cocktail of mold spores are inoculated on to the bread at the beginning of shelf life (Day 1). An inoculation point is made at two separate places on each of the left, right, top, and bottom side of the loaf, and one inoculation point on each end of the bread, giving each loaf of bread a total of ten inoculation points. A total of ten loaves of bread are inoculated in this manner for each variable tested. The bread is then bagged in a standard bread bag and twist tied shut, placed in a second bread bag and heat sealed shut, to eliminate as much outside influence on the mold growth as possible. The bread is then held at room temperature. Each day, each loaf is inspected for mold growth.

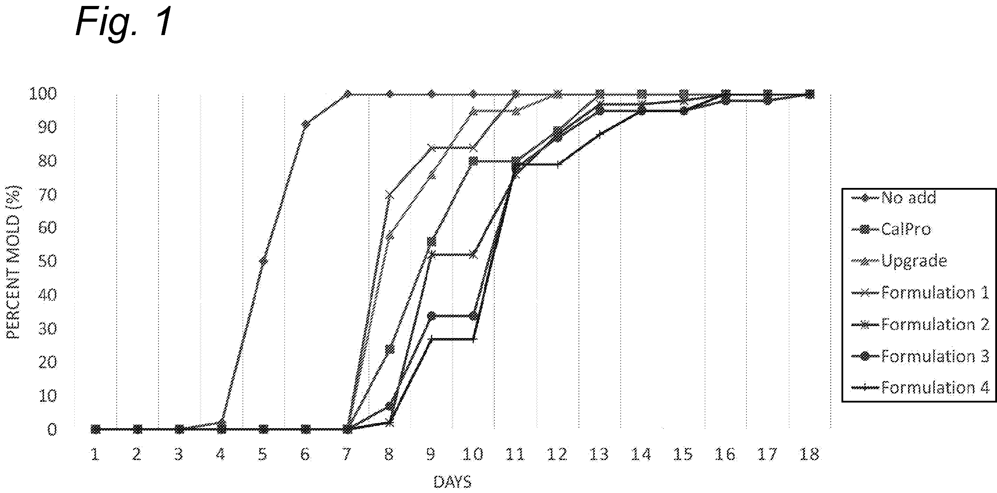

The result of the inoculation tests are summarized in figure 1. This figure shows, for each test, the average of the percentage of mold growth (i.e. the percentage of the loaf surface covered by mold, as determined by visual inspection). It can be seen in figure 1, that the test formulations of the invention provided comparative or enhanced mold growth inhibition as the reference products, i.e. Calcium propionate and Kerry upgrade. All tested formulations provided significant enhancement of inhibition compared to control (no additive).

### Sensorial Testing

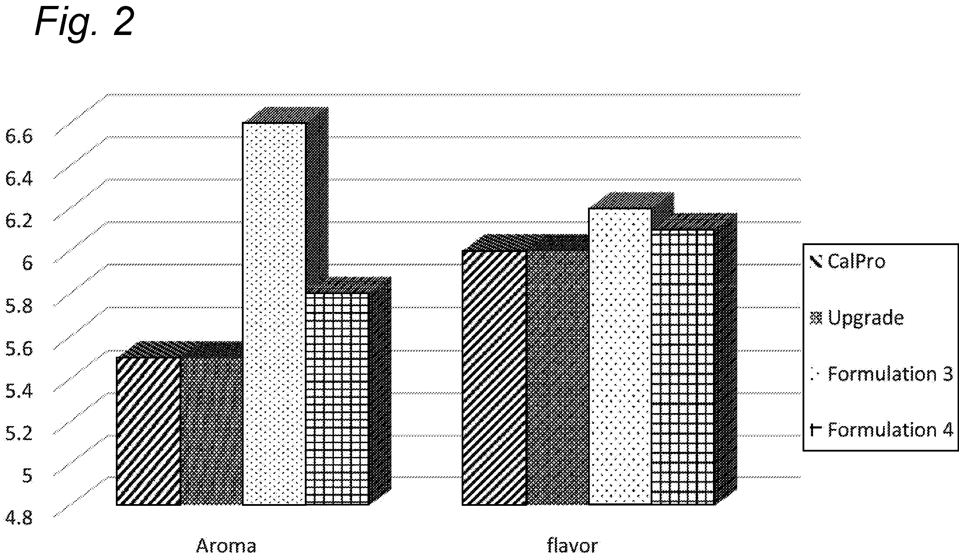

White bread loafs as prepared above were also subjected to sensorial testing. Bread was evaluated by a testing panel. The panelists were asked to score each sample of bread on aroma and flavor on a scale of 1 to 9 (where a higher number represents higher sensorial quality). The results are summarized in figure 2. Figure 2 shows that test formulation 3 scored significantly better than the reference products in terms of aroma. No significant difference in terms of flavor were observed.

## Claims

1. Organic acid preservative system comprising an acetate component, said acetate component comprising acetic acid and/or one or more acetic acid salts, and a propionate component, said propionate component comprising propionic acid and/or one or more propionic acid salts, wherein the acetate component and the propionate component make up at least 85 wt.% of the total amount of carboxylic acids and carboxylic acid salts in the preservative system and wherein the propionate component makes up 12 to 50 wt.% of said total amount of carboxylic acids and carboxylic acid salts, wherein the preservative system upon dissolution in water at 10 % (w/v) produces a pH value of at least 4.3.

2. Organic acid preservative system according to claim 1, wherein the propionate component and the acetate component are present in ratio (w/w) within the range of 0.1/1 to 1/1, preferably within the range of 0.12/1 to 0.4/1, more preferably within the range of 0.14/1 to 0.3/1.

3. Organic acid preservative system according to claim 1 or 2, wherein the propionate acid component comprises a combination of propionic acid and propionic acid salts, selected from the group consisting of sodium propionate, calcium propionate, potassium propionate and combinations thereof.

4. Organic acid preservative system according to any one of the preceding claims, comprising a partially or completely neutralized propionic acid ferment as the source of the propionate component.

5. Organic acid preservative system according to any one of the preceding claims, wherein the acetate component comprises a combination of acetic acid and acetic acid salts, selected from the group consisting sodium acetate, calcium acetate, potassium acetate and combinations thereof.

6. Organic acid preservative system according to any one of the preceding claims, comprising a concentrated buffered vinegar as the source of the acetate component.

7. Organic acid preservative system according to any one of the preceding claims further comprising a lactate component, selected from lactic acid and lactic acid salts.

8. Organic acid preservative system according to any one of the preceding claims, wherein the preservative system upon dissolution in water at 10 % (w/v) produces **a** pH value within the range of 4.5-6.7, preferably within the range of 5-6.5.

9. Organic acid preservative system according to any one of the preceding claims, which is obtainable by combining vinegar and a propionate ferment.

10. Organic acid preservative system according to any one of claims 1-9, wherein the preservative system has the form of a free-flowing powder or a liquid slurry.

11. Method of producing microbiologically stable edible farinaceous product, especially a baked bread product or baked pastry product, the method comprising the steps of:
a) providing a mixture including at least flour, water, yeast and salt in amounts for forming a dough;
b) blending with the dough a quantity of an organic acid preservative system as defined in any one of claims 1-10;
c) shaping or molding the dough; and
d) baking the shaped or molded dough to produce an edible product,
wherein the preservative system as defined in any one of claims 1-10 is applied in a quantity providing a dosage of the acetate component within the range of 500-40,000 ppm, based on the weight of the dough, and in a quantity providing a dosage of the propionate component within the range of 25-20,000 ppm, based on the weight of the dough.

12. Method according to claim 11, wherein the edible farinaceous product is bread.

13. Use of an organic acid preservative system as defined in any one of claims 1 -10 as a mold inhibitor in edible farinaceous products.

14. Use of claim 13, wherein said organic acid preservative system is used as a mold inhibitor in bread.

## Patentansprüche

1. Konservierungssystem auf Basis einer organischen Säure, umfassend eine Acetatkomponente, wobei die Acetatkomponente Essigsäure und/oder ein oder mehrere Essigsäuresalze umfasst, und eine Propionatkomponente, wobei die Propionatkomponente Propionsäure und/oder ein oder mehrere Propionsäuresalze umfasst, wobei die Acetatkomponente und die Propionatkomponente mindestens 85 Gew.-% der Gesamtmenge an Carbonsäuren und Carbonsäuresalzen in dem Konservierungssystem ausmachen und wobei die Propionatkomponente 12 bis 50 Gew.-% der Gesamtmenge an Carbonsäuren und Carbonsäuresalzen ausmacht, wobei das Konservierungssystem bei Auflösung in Wasser zu 10 % (w/v) einen pH-Wert von mindestens 4,3 ergibt.

2. Konservierungssystem auf Basis einer organischen Säure nach Anspruch 1, wobei die Propionatkomponente und die Acetatkomponente in einem Verhältnis (Gew./Gew.) im Bereich von 0,1/1 bis 1/1, vorzugsweise im Bereich von 0,12/1 bis 0,4/1, noch bevorzugter im Bereich von 0,14/1 bis 0,3/1 vorliegen.

3. Konservierungssystem auf Basis einer organischen Säure nach Anspruch 1 oder 2, wobei die Propionatsäurekomponente eine Kombination aus Propionsäure und Propionsäuresalzen umfasst, ausgewählt aus der Gruppe bestehend aus Natriumpropionat, Calciumpropionat, Kaliumpropionat und Kombinationen dieser.

4. Konservierungssystem auf Basis einer organischen Säure nach einem der voranstehenden Ansprüche, umfassend ein teilweise oder vollständig neutralisiertes Propionsäureferment als Quelle der Propionatkomponente.

5. Konservierungssystem auf Basis einer organischen Säure nach einem der voranstehenden Ansprüche, wobei die Acetatkomponente eine Kombination aus Essigsäure und Essigsäuresalzen umfasst, ausgewählt aus der Gruppe bestehend aus Natriumacetat, Calciumacetat, Kaliumacetat und Kombinationen dieser.

6. Konservierungssystem auf Basis einer organischen Säure nach einem der voranstehenden Ansprüche, umfassend einen konzentrierten gepufferten Essig als Quelle der Acetatkomponente.

7. Konservierungssystem auf Basis einer organischen Säure nach einem der voranstehenden Ansprüche, weiter umfassend eine Lactatkomponente, ausgewählt aus Milchsäure und Milchsäuresalzen.

8. Konservierungssystem auf Basis einer organischen Säure nach einem der voranstehenden Ansprüche, wobei das Konservierungssystem bei Auflösung in Wasser zu 10 % (w/v) einen pH-Wert im Bereich von 4,5-6,7, vorzugsweise im Bereich von 5-6,5 hervorbringt.

9. Konservierungssystem auf Basis einer organischen Säure nach einem der voranstehenden Ansprüche, das durch Kombinieren von Essig und einem Propionatferment erhältlich ist.

10. Konservierungssystem auf Basis einer organischen Säure nach einem der Ansprüche 1-9, wobei das Konservierungssystem die Form eines frei fließenden Pulvers oder einer flüssigen Slurry hat.

11. Verfahren zur Herstellung eines mikrobiologisch stabilen essbaren Mehlprodukts, insbesondere eines gebackenen Brotprodukts oder eines gebackenen Feingebäckprodukts, wobei das Verfahren die folgenden Schritte umfasst:
a) Bereitstellen einer Mischung, die mindestens Mehl, Wasser, Hefe und Salz in Mengen enthält, die zur Bildung eines Teigs erforderlich sind;
b) Vermischen einer Menge eines Konservierungssystems auf Basis einer organischen Säure, wie in einem der Ansprüche 1-10 definiert, mit dem Teig;
c) Formen oder Gestalten des Teigs; und
d) Backen des geformten oder gestalteten Teigs, um ein essbares Produkt herzustellen,
wobei das Konservierungssystem, wie in einem der Ansprüche 1-10 definiert, in einer Menge angewendet wird, die eine Dosierung der Acetatkomponente im Bereich von 500-40.000 ppm bereitstellt, basierend auf dem Gewicht des Teigs, und in einer Menge, die eine Dosierung der Propionatkomponente im Bereich von 25-20.000 ppm bereitstellt, basierend auf dem Gewicht des Teigs.

12. Verfahren nach Anspruch 11, wobei das essbare Mehlprodukt Brot ist.

13. Anwendung eines Konservierungssystems auf Basis einer organischen Säure, wie in einem der Ansprüche 1-10 definiert, als Schimmelinhibitor in essbaren Mehlprodukten.

14. Anwendung nach Anspruch 13, wobei das Konservierungssystems auf Basis einer organischen Säure als Schimmelinhibitor in Brot verwendet wird.

## Revendications

1. Système conservateur d'acide organique comprenant un composant acétate, ledit composant acétate comprenant de l'acide acétique et/ou un ou plusieurs sels d'acide acétique, et un composant propionate, ledit composant propionate comprenant de l'acide propionique et/ou un ou plusieurs sels d'acide propionique, où le composant acétate et le composant propionate représentent au moins 85 % en poids de la quantité totale d'acides carboxyliques et de sels d'acides carboxyliques dans le système conservateur et où le composant propionate représente 12 à 50 % en poids de ladite quantité totale d'acides carboxyliques et de sels d'acides carboxyliques, où le système conservateur, lors de la dissolution dans de l'eau à 10 % (p/v), produit une valeur de pH d'au moins 4,3.

2. Système conservateur d'acide organique selon la revendication 1, où le composant propionate et le composant acétate sont présents dans un rapport (p/p) compris dans la plage de 0,1/1 à 1/1, de préférence dans la plage de 0,12/1 à 0,4/1, et plus préférablement dans la plage de 0,14/1 à 0,3/1.

3. Système conservateur d'acide organique selon la revendication 1 ou 2, où le composant d'acide propionate comprend une combinaison d'acide propionique et de sels d'acide propionique, choisis dans le groupe constitué par le propionate de sodium, le propionate de calcium, le propionate de potassium et des combinaisons de ceux-ci.

4. Système conservateur d'acide organique selon l'une quelconque des revendications précédentes, comprenant un ferment d'acide propionique partiellement ou complètement neutralisé comme source du composant propionate.

5. Système conservateur d'acide organique selon l'une quelconque des revendications précédentes, où le composant acétate comprend une combinaison d'acide acétique et de sels d'acide acétique, choisis dans le groupe constitué par l'acétate de sodium, l'acétate de calcium, l'acétate de potassium et des combinaisons de ceux-ci.

6. Système conservateur d'acide organique selon l'une quelconque des revendications précédentes, comprenant un vinaigre tamponné concentré comme source du composant acétate.

7. Système conservateur d'acide organique selon l'une quelconque des revendications précédentes, comprenant en outre un composant lactate, choisi parmi l'acide lactique et des sels d'acide lactique.

8. Système conservateur d'acide organique selon l'une quelconque des revendications précédentes, où le système conservateur, lors de la dissolution dans de l'eau à 10 % (p/v), produit une valeur de pH comprise dans la plage de 4,5 à 6,7, de préférence dans la plage de 5 à 6,5.

9. Système conservateur d'acide organique selon l'une quelconque des revendications précédentes, qui peut être obtenu en combinant du vinaigre et un ferment propionate.

10. Système conservateur d'acide organique selon l'une quelconque des revendications 1 à 9, où le système conservateur se présente sous la forme d'une poudre à écoulement libre ou d'une suspension de liquide.

11. Procédé de fabrication d'un produit farineux comestible microbiologiquement stable, en particulier un produit de boulangerie cuit ou de pâtisserie cuit, le procédé comprenant les étapes suivantes :
a) fournir un mélange incluant au moins de la farine, de l'eau, de la levure et du sel en quantités suffisantes pour former une pâte ;
b) mélanger à la pâte une quantité d'un système conservateur d'acide organique tel que défini dans l'une quelconque des revendications 1 à 10 ;
c) façonner ou mouler la pâte ; et
d) cuire la pâte façonnée ou moulée pour produire un produit comestible,
où le système conservateur tel que défini dans l'une quelconque des revendications 1 à 10 est appliqué en une quantité fournissant un dosage du composant acétate compris dans la plage de 500 à 40 000 ppm, sur la base du poids de la pâte, et en une quantité fournissant un dosage du composant propionate compris dans la plage de 25 à 20 000 ppm, sur la base du poids de la pâte.

12. Procédé selon la revendication 11, où le produit farineux comestible est du pain.

13. Utilisation d'un système conservateur d'acide organique tel que défini selon l'une quelconque des revendications 1 à 10 comme un inhibiteur de moisissures dans des produits farineux comestibles.

14. Utilisation selon la revendication 13, où ledit système conservateur d'acide organique est utilisé comme un inhibiteur de moisissures dans le pain.
